# EUROPEAN PATENT APPLICATION

(11) **EP 1 477 534 A2**
(43) Date of publication of application: **17.11.2004**
(21) Application number: 04252578.2
(22) Date of filing: 01.05.2004
(51) Int. Cl.: C09D 5/03, C09D 163/00

(54) **Multiple-part fast cure powder coatings**

(30) Priority: 16.05.2003 US 471158 P
(71) Applicant: ROHM AND HAAS COMPANY, Philadelphia, Pennsylvania 19106-2399 (US)
(72) Inventor: Correll, Glenn D., Birsboro Pennsylvania 19508 (US); Horinka, Paul R., Blandon, Pennsylvania 19510 (US)
(74) Representative: Kent, Venetia Katherine

(57) **Abstract**

The present invention provides a powder composition in multiple separate parts comprising one or more than one resinous powder component in one or more than one part and, for each resin component, one or more than one powder, liquid or gaseous curing agent component in one or more than one separate part, wherein the average particle size ratio of each resinous powder component to its curing agent powder or droplet component ranges from 1.3:1 to 60:1 to insure the attraction of the resin and its curing agent to one another. Useful resins may include epoxy resin, polyester resin or their combination. The shelf life of the powder composition can be extended indefinitely by storing each resin and its curing agent in separate parts. However, each resin and its curing agent react within a period of from 0.01 to 600 seconds to form a cured powder coating when combined at a temperature of from 20°C and 200°C to enable very low temperature cure. In addition, the present invention provides a method of forming a powder coating from the inventive composition which comprises combining each of the separate parts in stream while or by applying them to a substrate, for example, as two or more than two separate feed streams from a single applicator device, followed by curing.

## Description

### FIELD OF THE INVENTION

The present invention relates to compositions in two or more than two separate parts which react quickly when combined to form powder coatings and to methods for forming powder coatings from such compositions at, for example, ambient temperatures. In particular, the present invention provides compositions comprising one or more than one powdered resinous component and one or more than one separate curing agent component which reacts quickly when combined with the resinous powder component to form cured powder coatings. In addition, the present invention provides methods making powder coatings from multiple part compositions.

### BACKGROUND OF THE INVENTION

One-component and two-component low temperature thermally curing powder coating compositions have been provided in a one-part powder coating which cures thermally at from 105°C to 149°C. However, their high reactivity limits their shelf life when all components are stored together and sprayed as a single stream. For example, in U.S. patent no. 6,509,413 B1, to Muthiah et al., a one-component powder is fully formed by grinding and screening only one extrudate containing resin, curing agent, catalyst and additives. Meanwhile, a more stable two-component powder may be formed using two extrudates, e.g. by grinding and screening together an extrudate comprising resin with an extrudate comprising a low temperature curing agent. Thus, all powder coating ingredients in both one-component and two-component powders are dry-blended together and packed into a single container, which can result in excessive blocking and in a shelf-life at room temperature of less than three months. A tendency to excessively block can necessitate expensive cold storage, shipping, and handling. Badly blocked powder is useless and should be discarded.

Powder coatings which are light cured, such as by using ultraviolet (UV) light, have a desirable storage stability and use a low amount of energy to form cured powder coatings. However, UV cured powders do not fully cure if light or radiation cannot penetrate a coating if it is too thick, e.g. ≥ 1.5 mils or 38.1 µm, or too opaque. Accordingly, at present only clear and translucent powder coatings having an adequate thickness may be fully light or UV cured.

Dual cure coatings have been developed to combine light cure and thermal cure to enable thicker films and opaque, colored films. However, dual cure powder coatings suffer from the same storage stability issues that plague low temperature thermally curing powders stored in a single container. Further, dual cure powders should still be exposed to heat, e.g. at temperatures of from 105°C to 225°C, for a time sufficient to cure them.

It would be desirable to minimize the energy input required to achieve the cure of powder coatings and to provide powder coatings that can be opaque and as thick or thin as may be desired, e.g. 1.0 to 6.0 mils or 25.4 to 152.4 µm, while eliminating the storage stability problems inherent in existing low temperature curing powder compositions.

### SUMMARY OF THE INVENTION

The present invention provides fast reacting compositions in two or more than two separate parts comprising one or more than one resinous powder component in one or more than one part and, for each resinous powder, one or more than one curing agent in a separate part chosen from powder, liquid and gaseous components, or their combination, wherein the two or more than two parts react when combined at temperatures of 20°C or more for a period of 0.01 seconds or longer, for example 10 seconds or longer to form cured powder coatings. Desirably, the two or more than two parts react when combined at temperatures of less than or equal to 200°C, for example, less than or equal to 149°C, less than or equal to 135°C, or less than or equal to 107°C, for a period of 0.01 seconds or longer, for example, 1 second or longer, or 10 seconds or longer to form cured powder coatings. Further, the two or more than two parts desirably react when combined at the cited temperatures for a period of 600 seconds or less, 120 seconds or less, or 60 seconds or less to form cured powder coatings.

To insure that the particles of resin and particles or droplets of its curing agent are attracted to one another when they are combined, the ratio of the average particle size of the powder particles comprising the resinous component to the average particle size of the powder particles comprising the curing agent should be 1.3:1 or higher, for example 1.5:1 or higher, or 1.7:1 or higher. Desirably, particle size ranges may be limited so that the ratio of the average particle size of the powder particles comprising the resinous component to the average particle size of the powder particles comprising the curing agent should be to 60:1 or less, for example 25:1 or less, or 17:1 or less. The average particle sizes of curing agents and resins within any given part of the composition containing more than one component may be preserved by dry blending all ingredients to form the part. Further, resin powders having a low average particle size polydispersity, as measured by laser light scattering, for example, of from 1.3 to 4.5, and thus a narrow particle size distribution aid in providing controlled attraction between resin and curing agent particles. Exemplary resinous components may comprise epoxy resins, polyester resins, acrylic resins, or hybrids or mixtures of two or more than two of these resins having an average particle size of from 5 to 50 µm. Exemplary curing agents may include primary amines, polycarboxylic acids and anhydrides, as well as their epoxy, acid, or anhydride adducts, free radical and cationic curing agents. Still further, the resinous component may comprise crystalline epoxy resin in epoxy or cationically cured resin systems or semi-crystalline polyester resin or cyclic oligomeric polyester resin in polyester systems to improve coating smoothness and melt flow. Yet still further, each separate part of the composition may have a distinct color or hue or all parts may have the same color or hue, such that reactively combining the two or more than two colored parts results in a coating having a uniform predetermined color, including a clear coating.

The present invention provides kits or systems comprising a separate container or separate compartments of a single container for each part of the composition. By separating reactive components into two or more than two separate parts, the shelf life of the composition may be extended indefinitely.

In addition, the present invention provides methods of making powder coatings combining the separate parts of a composition in-stream while applying them to one or more than one substrate, or, alternatively, combining the two or more than two parts by applying each part separately to the substrate, followed by curing.

Methods of making a powder coatings from multiple-part compositions may comprise combining all parts of the composition in-stream, for example, as separate feed streams from a single applicator device, while applying them to one or more than one substrate to form a coating layer, followed, if necessary, by heating to cure the coating layer to form a coating. Application systems comprising two or more than two feed streams, such as air assisted electrostatic spray guns having metered feed streams, enable the cure reaction to be delayed until the first point of contact of the streams. Alternative methods of making a powder coatings from multiple-part compositions may comprise combining the parts by applying each part to substrates from a separate applicator device, each having metered feed means, to form a coating layer, followed, if necessary, by heating to cure the coating layer and form a coating. In each method, the curing of the compositions is limited only by the speed of melt flow of the resin and the curing agent to achieve smooth film surfaces. Heating may comprise pre-heating the substrate prior to application to a substrate surface temperature upon application of from 25 to 200°C.

### DETAILED DESCRIPTION OF THE INVENTION

Multiple-part fast reacting compositions comprise one or more than one resinous powder component in one or more than one part, and one or more than one powder, liquid and/or gaseous curing agent component for each resin in one or more than one separate parts, wherein a reaction occurs in, for example, 0.01 seconds or longer and in 600 seconds or less when the parts are combined at temperatures from 20°C and 200°C. Each part of the composition is shelf stable; however, a rapid curing reaction results when the parts are brought together. In use, the composition of the present invention may reduce the amount of thermal energy used in the making of cured powder coatings by as much as 50%.

All ranges recited are inclusive and combinable. For example, a pD of 1.3 or more, for example, 1.5 or more, which may be 4.5 or less, or 4.0 or less, will include ranges of 1.3 or more to 4.5 or less, 1.5 or more to 4.5 or less, 1.5 or more to 4.3 or less, and 1.3 or more to 4.3 or less.

As used herein, unless otherwise indicated, the phrase "acrylic resin" includes acrylic, methacrylic, acrylate and methacrylate resins, and any mixture or combination thereof.

As used herein, the phrase "average particle size", refers to particle diameter or the largest dimension of a particle as determined by laser light scattering using a Malvern Instruments, Malvern, PA, device located at the Rohm and Haas powder coatings Reading, PA Facility, Equipment Serial #: 34315-33.

As used herein, the "glass transition temperature" or Tg of any polymer may be calculated as described by Fox in *Bull. Amer. Physics. Soc.,* 1, 3, page 123 (1956). The Tg can also be measured experimentally using differential scanning calorimetry (rate of heating 20°C per minute, Tg taken at the midpoint of the inflection or peak). Unless otherwise indicated, the stated Tg as used herein refers to the calculated Tg.

As used herein, unless otherwise indicated, the phrase "melt viscosity" refers to the melt viscosity of a polymer or resin as measured in centipoises at 150°C using a Brookfield Viscometer.

As used herein, unless otherwise indicated, the phrase "molecular weight" refers to the weight average molecular weight of a polymer as measured by gel permeation chromatography.

As used herein, unless otherwise indicated, the phrase "per hundred weight parts resin" or "phr" means the amount, by weight, of a specified ingredient per hundred weight parts of the total amount of resin or polymer contained in a coating powder, including cross-linking resins.

As used herein, unless otherwise indicated, the phrase "polymer" includes, independently, polymers, oligomers, copolymers, terpolymers, block copolymers, segmented copolymers, prepolymers, graft copolymers, and any mixture or combination thereof.

As used herein, unless otherwise indicated, the phrase "resin" includes, independently, polymers, oligomers, copolymers, terpolymers, block copolymers, segmented copolymers, prepolymers, graft copolymers, and any mixture or combination thereof.

As used herein, the phrase "wt. %" stands for weight percent.

As used herein, the term "part" may comprise one or more component of any kind, including resin and curing agent components, provided that no two components in each part react with each other.

Multiple-part compositions may comprise two, three, four or five parts, if desired, to separate resins from their curing agents. Simple two part compositions may comprise one or more resin component as one part, and one or more than one curing agent for the one or more resins as the second part. Further, two resin components, such as polyester and acrylic, may comprise separate parts wherein each resin is mixed with a curing agent for the resin of the other part. Still further, where resins may be cured in two ways, e.g. glycidyl methacrylate (GMA) which may be both cationically and radically cured, two-part compositions may be provided having a resin component in one part, and two curing agent components, e.g. free radical or UV initiators and cationic initiators or amines, in a separate part. Likewise, hybrid resin-forming compositions may comprise two parts, wherein each part has both a resinous component and one or more than one curing agent for the resinous component of the other part, e.g. saturated polyester and ultraviolet (UV) initiator in one part and acrylic resin and bis(β-hydroxyalkylamide) or other polyester curing agent in the other part. However, a two-part hybrid resin forming composition may comprise four parts, two each of resin and curing agent, where separation of all resin and curing agent powders is indicated to insure that resin and curing agent powders of different sizes do not react or block badly during storage. Further, any composition may comprise an additional part for any curing agent components (e.g. initiators) therein that are liquids and not powders, because liquids should be kept separate from powder parts to avoid wetting and blocking the powder.

Combinations of resins wherein one or more than one of the resins may be cured in two ways, may comprise three-part compositions. For example, hydroxyl functional unsaturated polyester and GMA resin components may comprise two separate parts, while epoxy curing agents may be mixed with polyester if they are not also strong cationic curing agents, and any free radical or UV initiators comprise the third part. If epoxy curing agents are strong enough to react with a hydroxyl functional unsaturated polyester, they may be mixed with the initiator instead of with the polyester.

To insure that the particles of resin and its curing agent are attracted to one another when they are combined, the resinous component particles and curing agent component particles should differ from each other in size and the particle size distribution of the resin component may be narrow. Suitably, the ratio of the average particle size of the powder particles comprising the resinous component to the average particle size of the powder particles comprising the curing agent should be 1.3:1 or higher, for example 1.5:1 or higher, or 1.7:1 or higher. Desirably, particle size ranges may be limited so that the ratio of the average particle size of the powder particles comprising the resinous component to the average particle size of the powder particles comprising the curing agent should be to 60:1 or less, for example 25:1 or less, or 17:1 or less. The average particle size of any resinous component powder may be at least 5 µm, as determined by laser light scattering, for example, at least 7 µm, or at least 22 µm, and any resinous powder may range up to 50 µm, for example, up to 8 µm, or up to 30 µm in average particle size. The average particle size of any curing agent powder, as determined by laser light scattering, of 1 µm or larger, for example, 2 µm or larger, or 3 µm or larger, such as, for example, 20 µm or less, or 12 µm or less, or 9 µm or less. If agglomerated into other components, the average particle size of a resin or curing agent component represents the primary particle size of that component within the agglomerate.

Resin powders may advantageously have a narrow particle size distribution and a low average particle size polydispersity (pD) of 4.5 or less, for example, 4.0 or less, or 3.0 or less, and such pD may be 1.3 or more, for example 1.5 or more. Low pD resin powders may include those that are produced by re-grinding or milling a once-milled powder one or two more times in an air classifier mill or jet mill, by precipitation or suspension polymerizing under high shear, followed by drying, or by spray drying powder melt, fluid mixture, aqueous emulsion of a processed powder, or suspension or dispersion of a processed powder as a suspension in high-pressure air or supercritical fluid, e.g. CO₂.

The differing powder particle sizes of different components may be preserved even after incorporating two or more of them into one part, e.g. by dry blending. However, the difference in average particle sizes of resin particles and curing agent particles, even where they do not react with each other, may be large enough to necessitate that they be kept in separate parts to prevent agglomeration.

The resinous component may comprise one or more than one resin chosen from epoxy resins, cationic curable resins, polyester resins, polyvinylidene fluoride resins, silicone resins, polyurethane resins, acrylic resins, mixtures, combinations and hybrids thereof, for example epoxy, acrylic and polyester resins and mixtures and hybrids thereof. For forming powder coatings, the resinous component of the present invention should be solid at room temperature and may suitably have a Tg of 40°C or above, for example 50°C or above, or 55°C or above. The lower limits of Tg recited above are necessary to prevent undue blocking of a coating powder. The tendency of a powder to sinter or block is an important measure of its commercial value. Minor blocking is normal for powders.

Epoxy resins useful in the present invention may comprise any such resins having a melt viscosity of from 300 to 8000 cps at 150°C and a Tg of 40°C or higher. Exemplary epoxy resins have an equivalent weight of 100 or more, for example, 400 or more, and up to 1100, for example, up to 1000, and a melt viscosity of from 500 to 2000 cps at 150°C. Mixtures of such epoxy resins may be used, for example, an epoxy resin having an equivalent weight from 100 and 400 and one having an equivalent weight from 400 and 1000 in a weight ratio of from 1:99 to 99:1. Suitable epoxy resins may comprise the reaction products of polyols, such as dihydric phenols, and epihalohydrin, such as epichlorohydrin. Suitable dihydric phenols may comprise bisphenol A, B, F, G, H, or S, or their mixtures, for example bisphenol A. If desired, the resultant diglycidyl ether of the bisphenol may be further reacted with additional bisphenol to extend the chain length. These epoxy resins are commonly referred to as diglycidyl ethers of bisphenol and are diepoxides. Further, useful epoxy resins may include polyglycidyl ethers or poly(β-methylglycidyl) ethers obtained by reacting any compounds having at least two free alcoholic hydroxyl groups and/or phenolic hydroxyl groups with any suitably substituted epichlorohydrin under alkaline conditions or in the presence of acidic catalysts followed by alkali treatment. Still further, useful epoxy resins may include epoxidized novolacs, such as the epoxy cresol-novolac and epoxy phenol-novolac resins prepared by glycidylation of phenol-and/or cresol-aldehyde condensates with epihalorohydrin. Yet still further, epoxy resins useful in the present invention can be selected from a number of other well known classes of epoxy resins, such as those derived from non-benzenoid materials, such as aliphatic and/or cycloaliphatic dihydric alcohols or polyols, such as glycerol. These resins may include the aliphatic or cycloaliphatic diglycidyl ether epoxy resins. Yet even still further, poly(N-glycidyl) compounds may also be used, being obtained, for example, by dehydrochlorination of the reaction products of epichlorohydrin with amines containing at least two amine hydrogen atoms, such as n-butylamine, aniline, toluidine, m-xylylenediamine, bis(4-aminophenyl)methane or bis(4-methylaminophenyl)methane.

The use of crystalline epoxy resins may improve the flow characteristics of the fused coating powder and, therefore, the smoothness of the fused and cured coating. In particular, desirable flow properties may be achieved when crystalline epoxy resin constitutes from 5 to 20 % by weight of the total amount epoxy resin used in the formulation of the powder. The performance of coating powders of this invention may deteriorate as the level of crystalline epoxy resin therein is increased because of the relatively low equivalent weights of such resins and the suitable amount of such resins may be 10% or less. Exemplary crystalline epoxy resin having a melting point from 40°C and 120°C include resins having an equivalent weight of 185, sold by Resolution Performance Products, Houston, TX, under the trademark RSS 1407.

Cationic curable resins may generally comprise, for example, epoxy resins, vinyl ethers, oxetanes, oxolanes, cyclic acetals, cyclic lactones, thiiranes, or thiotanes, or combinations comprising at least one of the foregoing resins. For example, the cationic curable resin may comprise polyglycidyl compounds, cycloaliphatic polyepoxides, epoxy cresol novolacs, or epoxy phenol novolac compounds having, on average, at least two epoxy groups in the molecule.

Suitable vinyl ethers may include, for example, C1 to C18 (cyclo)alkyl vinylethers and divinylethers (DVE) of glycols and polyols, e.g. poly(ethyleneglycol) or (PEG), such as (PEG200-DVE), and polyethyleneglycol-520 methyl vinylether. Suitable oxetane compounds include, for example, trimethylene oxide, 3,3-dimethyloxetane, 3,3-dichloromethyloxethane, 3-ethyl-3- phenoxymethyloxetane, or bis(3-ethyl-3-methyloxy)butane. Suitable oxolane compounds include, for example, tetrahydrofuran or 2,3-dimethyltetrahydrofuran. Suitable cyclic acetal compounds include, for example, trioxane or 1,3-dioxolane. Suitable cyclic lactone compounds include, for example, beta-propiolactone or epsilon-caprolactone. Suitable thiirane compounds include, for example, ethylene sulfide, 1, 2-propylene sulfide or thioepichlorohydrin. Suitable thiotane compounds include, for example, 1,3-propylene sulfide or 3,3-dimethylthiothane.

Crystalline epoxy resins may be added to cationic curable resins in the same manner and amount as they are added to epoxy resins.

Polyester resins may comprise one or more than one amorphous carboxylic acid functional or hydroxyl functional polyester resin, and/or one or more than one unsaturated polyester resin. Coating flow and smoothness may be improved by mixing one or more than one semi-crystalline polyester resin or cyclic polyester oligomer with the polyester resins. Suitable polyester resins may be linear or branched, and formed by the polymerization of polyols and poly-functional carboxylic acids. Suitably, polyester resin chains may be relatively short. Suitable acid functional polyesters should have acid numbers from 15 to 100, for example from 25 to 90. Suitable hydroxyl functional polyester resins may have hydroxyl numbers of from 2 to 20, for example from 2 to 12, or from 2 to 10.

Examples of suitable polyols for forming the polyester resin include 1,2-ethanediol, 1,3-propanediol, 1,4-butanediol, 1,6-hexanediol, 1,10-decanediol, 1,12-dodecanediol, 1,4-cyclohexanedimethanol, diethylene glycol, triethylene glycol, neopentyl glycol, trimethylolpropane, hydrogenated bisphenol A (2,2-(dicyclohexanol)propane), 2,2,4-trimethyl-1,3-pentanediol, 2-methyl-1,3-propanediol, 2-methyl-2-hydroxymethyl-1,3-propanediol, 2-ethyl-2-hydroxymethyl-1,3-propanediol, neopentyl glycol, polyalkylene polyols having a Tg of greater than 40°C, combinations comprising at least one of the foregoing polyols, and the like. Exemplary polyol monomers include 2-n-butyl-2-ethyl-1,3-propanediol (BEPD, CAS# 115-84-4), which may reduce blooming in cured powder coatings.

Examples of suitable poly-functional carboxylic acids include succinic acid, adipic acid, azelaic acid, sebacic acid, 1,12-dodecanedioic acid, terephthalic acid, isophthalic acid, phthalic acid, trimesic acid, tetrahydrophthalic acid, hexahydrophthalic acid, 1,4-cyclohexanedicarboxylic acid, 1,3-cyclohexanedicarboxylic acid, trimellitic acid, naphthalene dicarboxylic acid, and the like, and combinations comprising at least one of the foregoing poly-functional carboxylic acids. The corresponding acid halides, esters, or anhydrides of the aforementioned acids may also be used, for example, tetrahydrophthalic anhydride, hexahydrophthalic anhydride, trimellitic anhydride, phthalic anhydride, and the like.

A weatherable polyester may comprise the reaction product of from 15 to 90 mole % of isophthalic acid, from 5 to 30 mole %, for example from 15 to 30 mole %, of 1,4-cyclohexanedicarboxylic acid, with the remainder of acid, for example 65 mole % or less, of terephthalic acid, based upon the total number of moles of acid present, and from 50 to 100 mole %, such as 70 to 100 mole %, of branched polyols having from 5 to 11 carbon atoms, such as neopentyl glycol, based upon the total number of moles of polyols present, wherein at least 8 mole % of all reactants have a functionality of three or higher, such as trimethylolpropane, based upon the total number of moles of both acid and polyol present.

Unsaturated polyesters generally have weight average (Mw) molecular weights of 400 to 10,000, for example 1,000 to 4,500, as determined by gel permeation chromatography and degrees of unsaturation of from 2 to 20 weight percent (wt.%), for example from 4 to 10 wt. %, based on the weight of the unsaturated polyester resin. Such resins may be formed from di- and/or polyfunctional carboxylic acids (or their anhydrides) and di- and/or polyhydric alcohols. The unsaturation is typically supplied by the carboxylic acid, although it is possible to supply it through the alcohol, i.e. allyl alcohol. Often, monohydric alcohols or monofunctional carboxylic acids (or their esters) are employed for chain termination purposes. Suitable ethylenically unsaturated di- or polyfunctional carboxylic acids (or their anhydrides) include, for example, maleic anhydride, fumaric acid, itaconic anhydride, citraconic anhydride, mesaconic anhydride, aconitic acid, tetrahydrophthalic anhydride, nadic anhydride, dimeric methacrylic acid, trimellitic acid, pyromellitic anhydride, for example, maleic anhydride, fumaric acid, or their mixtures. Suitable monofunctional acids for chain termination include, for example, acrylic acid, methacrylic acid, and the like. Suitable di- or polyhydric alcohols include, for example, ethylene glycol, diethylene glycol, triethylene glycol, propanediol, butanediol, neopentyl glycol, cyclohexanedimethanol, hexanediol, 2-n-butyl-2-ethyl-1,3-propanediol, dodecanediol, bisphenol A, hydrogenated bisphenol A, trimethylol propane, and Pentaerythritol. Suitable allyl alcohols may include trimethylolpropane monoallyl ether, trimethylolpropane diallyl ether, glycerol allyl ether, pentaerythritol diallyl ether; pentaerythritol triallyl ether, glycerol diallyl ether and oxirane precursors of allyl alcohols, e.g. allyl glycidyl ether. Mixtures of the alcohols can also be used. For example, unsaturated polyesters may comprises from 0.5 to 8 wt. %, such as from 1.0 to 7.0 wt. %, of allyl group containing monomers, based on the weight of all reactants used to make the polyester.

Semi-crystalline polyester resins may be formed by polycondensation of polyols with polycarboxylic acids or anhydrides, esters or acid chlorides based on these acids, using an excess of acid over alcohol so as to form polyester resins with acid numbers of from 10 to 250, such as from 60 to 90, and with hydroxyl numbers no greater than 11. When used in the amount of from 1 to 25 phr, for example 2 to 20 phr, they may enhance the flexibility of coating powders and reduce the coating powder's overall melt viscosity, resulting in smoother, more flexible powder coatings. These polyesters generally exhibit a heterogeneous morphology, i.e., crystalline and amorphous phases. For example, the enthalpy of crystalline melting (ΔH) of semi-crystalline polyester resins may be from 20 to 1200 Joules per gram (J/gm), for example from 20 to 200 J/gm.

To provide the desired flexibility of the resulting powder coating, from 90 to 100 wt. %, and, for example, 100 wt. % of the total weight of the polyol used to form the semi-crystalline polyester resin is a linear diol. Minor amounts, e.g., no greater than 10 wt. % of the polyol content may be other polyols. In addition, it has unexpectedly been found that advantageous properties may be obtained where from 10 to 40 wt. %, for example from 20 to 30 wt. %, or from 20 to 25 wt. % of the total weight of polycarboxylic acids used to form semi-crystalline polyester resins are asymmetrically substituted aromatic polyacids or derivatives thereof, e.g. isophthalic acid, trimellitic anhydride, or a combination thereof.

A macrocyclic polyester oligomer may be used in the amount of from 0.1 to 40 phr, for example from 0.5 to 20 phr, to improve the flow of a powder coating. Macrocyclic polyester oligomers suitable for this invention may be obtained by the reaction of a diol with a diacid chloride, e.g. fumaric, maleic, octanoic, decanoic, and dodecanoic acid chlorides, in the presence of a non-sterically hindered amine, e.g. N-methyl heterocyclic monoamines such as N-methyl-pyrrolidine, as a catalyst, under anhydrous conditions. The macrocyclic polyester oligomers thus prepared have degrees of polymerization from 2 to 12 and are usually predominantly dimer, trimer, tetramer and pentamer.

As acrylic resins, a wide variety of (meth)acrylate-functional resins, poly(meth)acrylates and unsaturated polyesters are suitable as a free radical or UV curable resin. Suitable acrylic resins may comprise glycidyl methacrylate (GMA), acrylic prepolymers and acrylic polymers. Acrylic prepolymers may comprise, for example, aliphatic, aromatic, cycloaliphatic, araliphatic or heterocyclic polyols, polyesters, polyurethanes or polyepoxides terminated with at least two (meth)acrylate groups. For example, a di(meth)acrylate terminate urethane may be formed by reacting hydroxyl-functional (meth)acrylates, such as hydroxyethyl methacrylate and hydroxypropyl methacrylate, with crystalline isocyanates. Acrylic polymers may comprise polymers and copolymers of 1 to 6 carbon alkyl (meth) acrylates, including those containing of hydroxyalkyl (meth) acrylates, aminoalkyl (meth)acrylates, (meth)acrylic acid or their mixtures in the amount of 1 to 10 wt%, based on the weight of monomers used to make the polymer. For example, copolymers of methyl methacrylate and butyl acrylate may be used in the present invention.

Silicone resins may be used to provide heat stable powder coatings. Suitable silicone resins may comprise any silicone resin having organic substituents as well as curable alkoxy, hydroxyl or silanol groups which react at from 20°C and 200°C in the presence of one or more than one curing agent. Such resins may have a viscosity of from 500 and 10,000 cps at 150°C, for example 1000 to 5000 cps to insure flow out in the coating. Organic substituents may include monovalent hydrocarbons, alkoxy groups and (alkyl)aryloxy groups, as well as siloxanes or silsesquioxanes that may be substituted with monovalent hydrocarbons, hydroxyl groups, alkoxy groups and (alkyl)aryloxy groups. Examples of monovalent hydrocarbons include, but are not limited to, phenyl, methyl, C₂ through C₂₄ alkyl or (alkyl)aryl, and mixtures thereof. Useful silicone resins may have a degree of organic substitution of 1.5 or less, suitably from 1 to 1.5 to provide heat stable coatings. Degree of substitution is defined as the average number of substituent organic groups per silicon atom and is the summation of the mole percent multiplied by the number of substituents for each ingredient.

Useful heat stable silicone resins self-condense at high end-use temperatures, e.g., that of a barbecue grill or an automobile exhaust part, and therefore should comprise a silanol functionality (Si--OH ) or a hydroxyl functionality. The silicone resin of the present invention may have a condensable silanol or hydroxyl content of from 1.5 to 7 wt. %, for example from 2 to 5 wt. %. The condensable silanol or hydroxyl content should not be too high lest excess water outgasses during curing of the coating powder, resulting in foaming. On the other hand, the lower end of the condensable silanol or hydroxyl content range is important because below this the coating powder will cure too slowly to be suitable for commercial applications.

Among the silicone resins useful in the present invention are compounds of formula (I):

RₓR_{y}SiO_{(4-x-y)}/2 (I)

wherein each of Rₓ and R_{y} is independently a monovalent hydrocarbon group, another group of formula (I), or OR¹, wherein R¹ is H or an alkyl or an aryl group having 1 to 24 carbon atoms, and wherein each of x and y is a positive number such that 0.8≤(x+y)≤4.0, and further wherein the resin contains at least 1.5 weight % of OR¹ groups. Specific examples of useful silicone resins compositions may include organo-siloxanes comprising units, including dimethyl, diphenyl, methylphenyl, phenylpropyl and their mixtures, and MQ resins, such as those resins prepared from organochlorosilanes, such as methyltrichlorosilane, phenyltrichlorosilane and dimethyldichlorosilane by dehalogenation. Generally, the more phenyl groups, the higher the heat-resistance provided. For example, silicone resins may comprise silanol functionalities and further comprise random mixtures of phenyl groups and methyl or propyl groups, diphenyl siloxane groups and dimethyl or dipropyl siloxane groups, or phenylmethylsiloxane groups, wherein the ratio of phenyl groups to methyl and propyl groups is 0.5 to 1.5:1, for example 0.7:1 to 1.1:1.

The silicone resin of the present invention should contain 0.2% or less of organic solvents, for example 0.1% or less. However, most commercial silicone resins contain some residual organic solvent as a consequence of the process of silicone resin synthesis. Such organic solvent tends to be internally trapped within the silicone resin and is generally not removed when the silicone resin is melt blended with other components to form coating powder compositions. Accordingly, it may be necessary to substantially remove such residual organic solvent. This is accomplished by melting the silicone resin and removing solvent from the molten resin, e.g., by sparging with a gas, such as nitrogen, or by vacuum. Exemplary silicone resins may be made by removing solvent from commercial silicone resins, which further polymerizes the resins. For example, in a melt polymerization, residual solvents, absorbed water and water of condensation were removed by nitrogen sparging, followed by cooling the resins and then chilling them to a solid on a flaker. This "flaking" process yields resins with a Tg high enough to eliminate blocking problems. The resins also exhibited desirable combination of low outgassing during cure, acceptable viscosity and fast cure speed when catalyzed properly. One exemplary resin, which can be used without "flaking" is Morkote® S-101, from Rohm and Haas Company, Philadelphia, PA.

Polyurethane resins useful in the present invention may comprise any hydroxyl and/or isocyanate functional resins having a desirable Tg, particularly the reaction product of from 0.7 to 1.3 moles of isophorone diisocyanate or hexamethylene diisocyanate with from 0.7 to 1.3 moles of one or more than one polyhydric alcohol, such as C1 to C8 (cyclo)alkanediols, especially cyclohexanedimethanol, poly(alkylene glycol), dihydric phenols useful in making epoxy resins, glycerol or trimethylolpropane.

One or more than one solid, liquid or gaseous curing agent may be chosen from solid, liquid or gaseous epoxy resin curing agents, cationic curing agents, polyester resin curing agents, free radical curing agents, silicone resin curing agents, mixtures thereof and combinations thereof. Liquid curing agents may include neat liquids, or water or aqueous solutions or suspensions comprising the curing agent in a concentration of 1-75 wt. %, for example from 5 to 50 wt. %, based on the total weight of the solution or suspension.

Suitable epoxy resin curing agents may be selected from among the many that are commercially available and which cure an epoxy resin within 600 seconds, for example within 120 seconds, at temperatures from 20°C and 200°C. Epoxy curing agents may comprise amines and their adducts, polycarboxylic acids or anhydrides and their adducts, imidazoles and their epoxy adducts, and cationic curing agents. Except when using cationic curing agents or tertiary amines which may be used in lesser amounts, the amount of epoxy curing agent used, may range from 0.5 to 50 phr, for example from 2 to 40 phr, or from 5 to 40 phr.

Amines may include primary, secondary or tertiary (cyclo)alkyl or aromatic amines or polyamines, or their mixtures; or one or more than one epoxy, polycarboxylic acid or anhydride adduct thereof. To provide reduced shrinkage for use in thin films from 0.5 and 3 mils (12.7 to 76.2 µm), primary monoamines, disecondary diamines, and oligomers and epoxy, polycarboxylic acid and/or anhydride adducts thereof may be used. Monoamines useful in accordance with the invention are alkylamines having 1 to 18 carbon atoms, e.g. N-butylamine, diethylamine, stearyldimethyl amine, tri-n-hexylamine; polyamine compounds such as triethylamine, alkylenediamines having 1-6 carbon atoms, e.g. ethylenediamine, diethylenetriamine, N,N-dimethyl aminopropylamine, dicyandiamide, guanidine, and amidines; cycloaliphatic amines such as di(4-aminocyclohexyl)methane, di (3-methyl-4- aminocyclohexyl) methane, and I-amino-3-aminomethyl-3,5,5-trimethyl cyclohexane (isophorone diamine); aromatic amines, such as p,p'- bis(aminophenyl) methane, p,p'-bis(aminophenyl)sulphone, m- phenylenediamine, N,N'-diphenylethylenediamine; N,N'- dibenzylethylenediamine; N,N'-dibenzyl-(2,2,4) trimethylhexamethylendiamine, N,N'-benzyl-(2,4,4) trimethylhexamethylendiamine, aniline, p- flouraniline, benzylamine, 1-aminoadamantane, and alpha-phenethylamine; heterocyclic amino compounds such as melamine and morpholine; dimethyl (aminomethyl) phosphine oxide; and alkanolamines having 2 to 6 carbon atoms, e.g. propanolamine, dimethylethanol amine, methyldiethanol amine. For example, amine curing agents are solid at room temperature and comprise (cyclo)aliphatic or aromatic polyamines having primary, or secondary amino groups, or both, but may also comprise gasses, such as ammonia, or liquids. In the case of liquid amines, liquids may be adsorbed onto a submicron sized carrier such as fume silica, wollastonite, diatomaceous earth and talc to form a powdery component that may be applied by electrostatic spray. Examples of suitable amines may comprise aliphatic polyamines having primary amino groups, such as the HT-835 hardener from Vantico, Inc., Brewster, N.Y., or epoxy adducts of aliphatic polyamines having secondary amino groups available under the trademark ANCAMINE® 2014 AS, by Air Products & Chemicals (Allentown, PA) for white and light colored coatings.

Suitable polycarboxylic acids and anhydrides include maleic acid, maleic anhydride (MA), phthalic acid and phthalic anhydride, tetrahydrophthalic acid and tetrahydrophthalic anhydride, hexahydrophthalic anhydride, bicyclo-2.2.1-heptene-2,3-dicarboxylic anhydride, methyl bicyclo-2,2,1-heptene-2,3-dicarboxylic anhydride isomers, 1,4,5,6,7,7-hexachloro-bicyclo 2.2.1-5-heptene-2,3-dicarboxylic anhydride, succinic acid or its anhydride, alkenyl succinic acids or their anhydrides, pyromellitic acid, pyromellitic dianhydride, 3,3',4,4'-benzophenone tetracarboxylic dianhydride, trimellitic acid or its anhydride and, and 1,4,5,6,7,7-hexachloro-5- norbornene-2,3-dicarboxylic anhydride (HET). Polycarboxylic anhydrides may be particularly suitable, as they limit outgassing from free water upon reaction. Mixtures of two or more than two polycarboxylic acids or anhydrides may also be used.

Examples of imidazoles may include substituted, unsubstituted imidazoles and their adducts, such as imidazole, 2-methylimidazole, and 2-phenylimidazole, 4,5-diphenyl imidazole, 1-ethyl imidazole, 4-methyl imidazole.

Useful curing agent adducts may include polycarboxylic acid or anhydride adducts of diamines and polyamines, epoxy adducts of diamines and polyamines, polyepoxide-alkanolamine adducts, polyol adducts of polycarboxylic acids and their anhydrides, epoxy, aziridine and alkylenimine adducts of polycarboxylic acids and their anhydrides, and imidazole adducts with epoxy resins, such as diglycidyl ethers of diphenols. Specific examples of adducts may include partial esters and transesterification products of trimellitic acid or its anhydride with ethylene glycol and/or glycerol; polyamine, monoethanolamine, diethanolamine, mono- and/or diisopropanolamine adducts with polyepoxides having an epoxy equivalent weight of from 100 to 1000; adducts of 1 mole of polycarboxylic acid with from 2 to 5 moles of alkylenimine, such as ethylenimine and propylenimine; adducts of 1 mole of polycarboxylic acid, such as with from 1 to 1.5 moles of N-(aminoalkyl) aziridine, such as N-(2-aminoethyl) aziridine, N-(3-aminopropyl) aziridine, N-(2-aminopropyl) aziridine and the like; and adducts of 3 moles of aliphatic or cycloaliphatic polyamine, suitably isophorone diamine, with 1 mole of dialkyl maleate, e.g. dimethyl maleate, with any alkanol resulting from the reaction being removed.

Cationic cure catalyst may be used to cure epoxy resins, polyester resins, polyurethane resins, hydroxyl and acid functional (meth)acrylic resins and hydrolysable silicone resins in addition to the other cationic curable resins discussed herein. For example, strong Lewis acids may be used as cationic cure catalysts. In addition, extra curing agents can be used, e.g. carboxylic anhydrides. The amount of cationic cure catalyst may range from 0.01 to 10 phr, for example from 0.05 phr to 5 phr, or from 0.1 phr to 2 phr.

Suitable catalysts may comprise quaternary ammonium salts, phosphine compounds and onium salts, e.g. phosphonium salts, tertiary amines, basic nucleophiles, and phosphine compounds, such as triphenyl phosphine (TPP). Such compounds may include tetra-substituted ammonium halide salts, tetra-substituted phosphonium halide salts, e.g. alkyl triaryl phosphonium halides, such as ethyl triphenyl phosphonium bromide; tetra-substituted phosphonium, tetra-substituted arsonium, tetra-substituted ammonium, or tetra-substituted borate salts, or mixtures thereof; imidazole tetra-substituted borates; or mixtures comprising at least one of the foregoing salts. The substituents may be independently Cl, Br, F, alkyl groups, alkenyl groups, aryl groups, or substituted phenyl groups, each having from one to 36 carbon atoms. In addition, the imidazole may comprise as substituents hydrogen atoms, acyl groups, aryl groups, cycloalkyl groups, cycloalkenyl groups, aldehyde groups, carboxyl groups, cyano groups, nitro groups, or combinations comprising at least one of the foregoing groups.

Specific examples of suitable cationic cure catalysts include tetramethyl ammonium bromide, chloride or iodide, trimethyl benzyl ammonium hydroxide, trimethyl benzyl ammonium methoxide, phenyl trimethyl ammonium chloride, phenyl trimethyl ammonium bromide, myrystyltrimethylammonium bromides, myrystyltrimethylammonium iodides, myrystyltrimethylammonium chlorides; allyl triphenyl phosphonium chloride, benzyl triphenyl phosphonium chloride, ethyl triphenyl phosphonium bromide (ETPPB), ethyl triphenyl phosphonium iodide (ETPPI), bromomethyl triphenyl phosphonium bromide; lithium alcoholates, such as lithium butyrate; benzyl-4-hydroxyphenylmethyl sulfonium hexafluoroantimonate and like aromatic sulfonium salts; dicyandiamide and like amide compounds; adipic acid dihydrazide and like carboxylic acid dihydrazide compounds; imidazoline compounds; imidazole compounds; TPP; triethylamine, triphenyl amine, N-dimethylaminopyridine, benzotriazole, tetramethyl guanidine, 1,5-diazabicyclo[4,3,0,]non-5-ene, and 1,5,7-triazabicyclo[4, 4,0,]dec-5-ene.

Suitable polyester curing agents may comprise epoxy-functional or bis(beta-hydroxyalkylamide) compounds, adducts or mixtures thereof, or for hydroxyl functional polyesters, polycarboxylic acid or anhydride functional compounds or adducts, or, for acid functional polyesters, polyols and/or their hydroxyl functional adducts. Suitable epoxy-functional compounds may have epoxy functionalities of at least 2, for example at least 3, and up to 16. Suitable polyols may comprise any hydroxyl functional polyester or poly(alkylene oxide) having a Tg of 40°C or higher. Suitable polycarboxylic acids or their anhydrides may comprise any that are useful in curing an epoxy resin, including their adducts, described above. The stoichiometric ratio of the total epoxy or hydroxyl functionality of epoxy or hydroxyl functional compounds to the total carboxylic acid functionality of amorphous carboxylic acid functional polyesters resin is suitably from 0.7 to 1.3, for example from 0.8 to 1.2. The stoichiometric ratio of the acid or anhydride functionality of the acid or anhydride functional compounds to the hydroxyl functional of the amorphous hydroxyl functional polyester resins may be from 0.7 to 1.3, such as from 0.8 to 1.2.

Macrocyclic oligomeric polyesters are cured by ring opening. When using macrocyclic oligomeric polyesters, useful ring opening polymerization catalysts may be exemplified by basic reagents, tin alkoxides, organotin compounds (i.e., compounds containing Sn-C bonds), titanate esters and metal acetylacetonates. Suitable basic reagents include alkali metal hydroxides and phosphines. Such catalysts may be used in the amount of from 0.01-2.0 mole percent, based on the number of moles of repeat units in the oligomers.

Thermal free-radical curing agents and UV initiators or photoinitiators may be used to cure acrylic and unsaturated resins, such as unsaturated polyester resins. Suitable free-radical curing agents include, for example, peroxides such as peroxy ketals, such as 1,1-bis(t-butyl peroxy)-3,3,5-trimethylcyclohexane, diacylperoxides, such as benzoyl peroxide, peroxy esters and peroxy carbonates; and transition metal compounds based on fatty acids, oils, and/or tertiary amines, for example cobalt soaps, such as cobalt octoate, cobalt neodecanoate, cobalt naphthenate, cobalt octadecanoate, and magnesium salts. Effective quantities of peroxide catalysts may be from 0.01 to 10 phr, for example 0.1 to 6 phr, or 0.5 phr to 4.0 phr. Effective quantities of metal catalyst may be from 0.01 to 2 phr, for example from 0.05 to 1.0 phr. Suitable UV initiators may include, for example, alpha cleavage photoinitiators, hydrogen abstraction photoinitiators, and the like. Suitable alpha cleavage photoinitiators include, for example, benzoin, benzoin ethers, benzyl ketals, such as benzyl dimethyl ketal, acyl phosphines, such as diphenyl (2,4,6-trimethyl benzoyl) phosphine oxide, aryl ketones, such as 1-hydroxy cyclohexyl phenyl ketone, and the like. Suitable hydrogen abstraction photoinitiators include, for example, Michler's ketone, and the like. Examples of radical photoinitiators useful in the present invention are dimethoxy phenyl acetophenone, and 2-hydroxy, ethoxyphenyl, 2-hydroxy, 2-methylpropane-1-one. Effective quantities of UV initiators may range from 0.05 to 5 phr, for example from 0.1 to 4 phr, or from 0.5 to 2 phr.

Suitable curing agents for coatings containing acrylic resin or mixtures of acrylic and epoxy resin may comprise adducts of 1 mole of monoethylenically unsaturated acids, such as (meth)acrylic acid, ethacrylic acid, and/or other unsaturated polycarboxylic acids with from 2 to 5 moles of alkylenimines, such as ethylenimine and propylenimine. Such curing agents may be used in amounts of from 0.05 to 5 phr, such as from 0.5 to 4 phr.

Silicone resin curing agents for curing at least the silanol groups in the silicone resins may include metal, e.g. zinc, aluminum, tin and/or magnesium, salts of carboxylic acids, such as zinc decanoate or zinc dodecanoate, metal salts of β-dicarbonyl compounds, such as zinc acetylacetonate, metal salts of dialkylcarboxylates, such as zinc neodecanoate and metal alkoxylates, such as trialkoxytin. Metal salts are used in the amount of from 0.1 to 2.5 phr, for example from 0.2 to 1.5 phr.

Suitable polyurethane curing agents may include any polyol used to cure polyesters, any polycarboxylic acid or anhydride useful in curing epoxy resins, including their adducts, any amine compounds useful in curing epoxy resins, any hydroxyl functional compound which useful in curing polyester resins, or mixtures thereof. The stoichiometric ratio of the acid or anhydride functionality of curing agent compounds to the hydroxyl functionality of polyurethanes resin may be from 0.7 to 1.3, or from 0.8 to 1.2. The stoichiometric ratio of hydroxyl or amine functionality of curing agent compounds to isocyanate functionalities of polyurethane resins may be from 0.7 to 1.3, or from 0.8 to 1.2.

Powder compositions of any one part may comprise from 0.10 to 5 phr, for example from 0.50 to 3 phr, of one or more than one melt flow aid, for example, acrylic oligomers, or, in a silicone resin system, silicone oils such as cyclopentasiloxane and/or poly(dimethylsiloxane) having from 5 to 200 siloxy groups and, optionally, one or more than one Si-OH group. Examples of melt flow aids include the MODAFLOW™ poly(alkylacrylate) products and the SURFYNOL™ acetylenic diols; they may be used singly or in combination.

Any part which is a powder suitably contains from 0.1 to 5 phr, such as from 0.1 to 1.5 phr, of one or more than one dry flow aid to promote powder handling and fluidity. Dry flow aids may be chosen from fume silica, alumina, aluminum hydroxide, fume magnesium oxide, magnesium hydroxide, silica coated titanium dioxide, other metal oxides, and mixtures thereof.

Any part which is a powder may further comprise additives, such as pigments, optical brighteners, fillers such as calcium carbonate and bentonite clays, antioxidants, leveling agents, such as waxes, polyacids and acid functional poly(meth)acrylates, acid functional matting agents, degassing agents, lubricants, slip aids, thixotropes and other additives may also be present. Titanium oxide, metal oxide pigments and organic pigments in amounts of from 5 to 50 phr or more, exemplify pigments that may be used. Optical brighteners, exemplified by 2,2'-(2,5-thiophenediyl) bis [5-t- butylbenzoxazole], sold under the trademark UVITEX OB, may be present at from 0.1 to 0.5 phr. Anti-oxidants may also be used at a concentration of from 0.5 to 2.0 phr to prevent the discoloration of the coatings even at the relatively low curing temperatures suitable for the purposes of this invention. Examples of the anti-oxidants that are useful in this invention include sodium hypophosphite, tris-(2,4-di-t-butyl phenyl) phosphite, and calcium bis([monoethyl(3,5-di-t-butyl-4-hydroxybenzyl)phosphonate]. Mixtures of anti-oxidants may be used. A very small amount of lubricants, e.g. poly (dimethylsiloxane) oil), may be added in amounts of from 0.01 to 0.5 phr to prevent clogging of the application device.

Coating powders may be produced in separate parts. In compositions where low pD is not critical to maintain attraction between resin particles and particles or droplets of curing agent for the resin, such as where the average particle sizes of resin and curing agent differ greatly from one another, any resinous component containing part may be made, for example, by mixing together one or more than one resin powder, any curing agent(s) not reactive with the one or more than one resin, and any additives, followed by melt blending in an extruder or other melt mixing device, with heating above the melting point of the one or more than one resin. The extruded composition may then be rapidly cooled and broken into chips, then ground with cooling, and, as necessary, then sorted according to a desired average particle size limit. Optionally, gaseous or supercritical fluid, e.g. carbon dioxide, may be charged to the extruder, if necessary, to lower extrusion temperatures.

Where a low resin particle size pD is desired, parts comprising resin particles may made by be melt mixing resin with additives, followed by drying, grinding, and, optionally, re-grinding to a desired average particle size and pD of the resin. Nonreactive curing agents may then by dry blended into the mixture to preserve primary particle sizes within the part.

In addition, any resin component containing part may be produced by aqueous suspension or precipitation polymerization at a temperature of from 30°C to 100°C, with shear, and, optionally, in the presence of any additives or curing agents not reactive with the resin(s), followed by dewatering, drying, and optionally grinding, to form a low Pd finely divided powder.

Powdered resin(s), any curing agent(s) and any additives comprising any one part may simply be dry blended to form finely divided powder parts. Where low pD resin powders have been made by spray drying, suspension or precipitation polymerization, such powders should be dry blended to preserve primary resin particle size distribution.

If any part is a gas or a liquid, it should be stored and applied to a substrate separately from any powder part.

All powder parts of the coating of the present invention may be dry blended or ground in a ball mill, jet mill, air classifying mill, or their combinations. Resinous component containing powders and cooled products of melt-blending or extrusion may be milled one, two or more than two times to reduce their average particle size, as determined by laser light scattering, to from 5 to 50 µm, for example, from 8 to 30 µm and to narrow its particle size distribution. However, as curing agent particles are often smaller than resin particles, powdered curing agent components containing those smaller curing agent particle may not have to be milled more than once, if at all.

Where the two or more than two parts of the powder coating are powders, for example two-part compositions, powder coatings may be made by applying two or more than two separate feed streams from a single applicator device in a "single device co-spray". Application systems comprising two or more than two feed streams, such as an electrostatic spray gun having metered or controlled feed streams for each of the parts of the composition, enable the cure reaction to be delayed until the first point of contact of the two or more than two streams. For example, two parts of a fast reacting composition may be applied by an electrostatic spray gun, triboelectric gun, corona charging gun, or a flocking device, having two separate, metered feed streams, such as an air assisted electrostatic spray gun having two separate, metered feed streams. Accordingly, each part of the powder may be forced into the gun under 40 psi pressure, while air at 20 psi passes into the powder conduits just before the powder passes into the nozzles.

Alternatively, methods of making powder coatings from, for example, a two-part compositions may comprise applying each of the two-parts to substrates from separate applicator devices in a "multiple device co-spray". The two parts can be applied to any substrate simultaneously; the two parts can be sprayed so that their spray streams impinge upon on another before hitting the substrate; or the two parts can be sprayed onto the substrate in one or more than one alternate layers. In any multiple device co-spray method, the same applicator devices that are used in any single device co-spray method may be used. However, when any parts are liquid or gas, such as aqueous solutions or suspensions, devices used to apply the liquids or gasses may comprise liquid spray guns, ultrasonic atomizers, compressed air atomizers or electric atomizer systems. Suitably, the liquid or gas spray device has a metered feed means. Suitable liquid spray gun devices may comprise electrostatic spray guns, including airless and pneumatic spray guns, and high volume low pressure (HVLP) spray guns. Such commercially available devices include BINKS® spray guns, available from ITW Industrial Finishing, Holland, OH, a NortecTM AirFogTM atomizing nozzle humidification system, or a Mee Fog system, sold by Mee Industries Inc., Monrovia Calif.

Substrates may be coated vertically on a conveyor line, whereby each substrate may be suspended by one or more than one electrically conductive grounded jig or hook or both, or may be coated on a flat line conveyor having electrically conductive bands around the circumference of the conveyor belt. Substrates that are not electrically grounded, e.g. those coated in the field, may be grounded via a wire or metal clip attachment to a lightning rod or other grounded metal object.

An exemplary method of forming coatings further comprises pre-heating any one or more than one substrate prior to application so that the substrate surface temperature is at least 25°C, for example, at least 40°C, and wherein the substrate surface temperature is less than or equal to 200°C, for example, less than or equal to 140°C, less than or equal to 100°C, or less than or equal to 80°C, or less than or equal to 60°C. Preheating of any substrates before coating may help the powder coating reach its flow temperature without the use of an oven. Preheating also minimizes outgassing during cure. Convection, and/or infrared (IR) preheating may be used, for example, with IR being useful for rapid preheating which takes from 2 to 10 seconds. For example, the TRIAB Speedoven sold by Thermal Innovations Corporation is suitable for the purposes of this invention.

Additionally, coatings on any substrate may be heated after application for as long as 600 seconds, for example as long as 120 seconds, and at temperatures of up to 200°C, such as up to 140°C.

Substrates to be coated may include steel and industrial metal objects, such as major appliances, building and construction materials and heat sensitive substrates. Building and construction materials may include extruded aluminum, metal and plastic window frames, pipes, steel girders, exterior and interior building surfaces, brick, concrete and masonry. Heat sensitive substrates include, without limitation, wood, such as, natural wood, including softwood and hardwood, hard board, plywood, particle board, medium density fiber board (MDF), electrically conductive particle board (ECP), masonite board, and other wood products; brass and non-ferrous metals, plastic, FRP and SMC composites, prepregs and composites with a heat sensitive aspect, e.g. plastic surfaces, paper, cardboard, glass, ceramic, graphite, and the like.

## Claims

1. A powder composition in two or more than two separate parts comprising:
one or more than one resinous powder component in one or more than one part; and,
for each resinous component, one or more than one of a powder, liquid or gaseous curing agent component in a separate part,
wherein for each resinous component, the ratio of the average particle size of said powder comprising said resinous component to the average particle size of the powder, liquid droplet or gaseous droplet comprising said curing agent component ranges from 1.3:1 to 60:1 and,
further wherein, the said resinous and curing agent components react when combined for a period of from 0.01 to 600 seconds at a temperature of from 20°C to 200°C to form a cured powder coating.

2. A powder composition as claimed in claim 1, wherein the said resinous and curing agent components react when combined for a period of from 0.01 to 120 seconds to form a cured powder coating.

3. A powder composition as claimed in claim 1, wherein the said one or more than one resinous component is chosen from epoxy resin, cationic curable resin, polyester resin, polyvinylidene fluoride resin, silicone resin, polyurethane resin, acrylic resin, mixtures and hybrids thereof.

4. A powder as claimed in claim 3, wherein the said one or more than one resinous component powder is chosen from an epoxy resin, acrylic resin, polyester resin, mixtures and hybrids thereof, and,
further wherein, when any one of said resinous component powder is an epoxy resin, said resinous component further comprises a crystalline epoxy resin, and,
still further wherein, when any one of said resinous component powder is a polyester resin, said resinous component further comprises a semi-crystalline polyester, a cyclic oligomeric polyester, or mixtures thereof.

5. A composition as claimed in claim 1, wherein the average particle size polydispersity (pD), of each powder comprising said one or more than one resinous component, as measured by laser light scattering, ranges from 1.3 to 4.5.

6. A method of forming a powder coating from a composition in two or more than two separate parts wherein one or more than one resinous powder comprises one or more than one part and, further wherein, for each resinous component, a separate part comprises one or more than one of a powder, liquid or gaseous curing agent for curing said resinous component, said method comprising
combining said parts while applying or by applying the said parts to an optionally pre-heated substrate to form a coating layer and,
if necessary, heating said coating layer to form a cured coating.

7. A method of making a powder coating as claimed in claim 6, wherein combining said parts comprises mixing together and applying said two or more than two parts as separate feed streams from a single applicator device.

8. A method of making a powder coating as claimed in claim 7, wherein said applicator device comprises an air assisted electrostatic spray gun having two or more than two metered feed streams, respectively, for each of the said parts.

9. A method of making a powder coating as claimed in claim 6, wherein combining said parts comprises applying each of said two or more than two parts to a substrate from a separate applicator device.

10. A method of making a powder coating as claimed in claim 6, wherein said heating comprises pre-heating the said substrate prior to application so that the substrate surface temperature is from 25 to 200°C during application.
